# EUROPEAN PATENT APPLICATION

(11) **EP 1 574 482 A1**
(43) Date of publication of application: **14.09.2005**
(21) Application number: 04075827.8
(22) Date of filing: 12.03.2004
(51) Int. Cl.: C02F 3/28, C02F 3/00

(54) **Capacity measurement of an anaerobic sludge bed reactor**

(71) Applicant: BIOTHANE SYSTEMS INTERNATIONAL B.V., NL-2623 EW Delft (NL)
(72) Inventor: Versprille, Abraham Izaak, 2051 LE Overveen (NL); Frankin, Robertus Johannes, Cilandak Jakarta (ID)
(74) Representative: Winckels, Johannes Hubertus F.

(57) **Abstract**

The invention is directed to online capacity measurement of an anaerobic sludge bed reactor for an anaerobic waste water purification process, said process comprising measuring the sludge bed heightmonitoring the sludge bed reactor activity and combining the data thus obtained to determine the capacity.

## Description

The present invention is in the area of anaerobic waste water purification and more in particular anaerobic sludge bed reactor systems.

Anaerobic sludge-bed reactor systems utilise consortia of anaerobic bacteria to convert pollutants in wastewater to biogas. These anaerobic bacteria grow in aggregates often referred to as granular biomass. The systems, known as UASB, EGBS, IC etc. are characterised by low net biomass production (typically 2-3 % of converted COD) as a result of the low net yield of anaerobic bacteria involved. This is a significant system advantage, as the excess biomass developed in wastewater treatment systems has to be disposed as a solid waste, at significant cost.

The low biomass growth of such systems also has a downside: Systems need to be inoculated with significant amounts of granular biomass, as spontaneous development of such granular biomass would involve long start up time (up to a year or more depending on the wastewater). Inoculation is expensive and troublesome.

Despite seeding systems with granular biomass the start up is relatively slowly due to low net growth and adaptation requirement to specific wastewater constituents.

Therefore the start up is a critical process which is relying heavily on the skill of operators. In case of system failure (e.g. temporary overloading, biomass wash out, toxicity etc.) a restart is again slow and cumbersome due to limited availability of such seed biomass and its high cost.

Also after start up systems should be run and monitored carefully by skilled operators to secure trouble free operation. The present method of such monitoring is usually by manual sampling and subsequent laboratory analysis. Data collection, processing and feed back to system operation is manual and ad hoc and involves high-level operator skills and attention.

Moreover as a result of the foregoing, systems tend to be designed at relatively conservative design loading rates resulting in significant oversizing of reactors and therefore increased systems cost.

The capacity of sludge bed reactor system (expressed as kg COD/m3.day) is dependent on three parameters:
- The amount of (granular) biomass (often called "sludge") in the reactor (expressed as kg sludge)
- The activity of such biomass (expressed as kg COD removed/kg sludge.day)
- The availability of such biomass (taking into account dead space, short circuiting etc.)

It is an object of the invention to provide an improvement to the existing sludge-bed reactor systems with an online, automatic capacity measurement module, which would allow:
- more automated and controlled start up with less dependency on operator skills, reducing overall start up time.
- designing systems with less inherent contingency capacity thereby reducing overall investment costs for reactors and ancillaries
- more automatic operation with minimal operator interface increasing stability and robustness of the system, contributing to increased overall performance
- improved performance in terms of yield, COD reduction and the like.
- early warning system for system set-up, inhibition / toxicity, off-spec conditions etc.
- online supprt (via internet) of the operators from experienced process engineers
- secure biomass retention and inventory
- control tools for operational cost reduction(e.g. running at lower pH thereby saving on cost for alkalinity, running at lower temperature thereby saving on heating requirement etc).
- to plan his production discharges (in specific cases) and/or optimal

### operating conditions.

Accordingly the invention is directed to a process for online capacity measurement of an anaerobic sludge bed reactor for an anaerobic waste water purification process, said process comprising measuring the sludge bed height, monitoring the sludge bed reactor activity and combining the data thus obtained to determine the capacity a process.

The invention is further directed to an analysis system for online capacity measurement of an anaerobic sludge bed reactor and a process for anaerobic waste water purification.

These aspects of the invention have the common feature of measuring the sludge bed height, monitoring the sludge bed reactor activity and combining the data thus obtained to determine the capacity.

The invention also provides for a "module" consisting of instrumentation, software and process control logic's, which can be superimposed on sludge bed reactor systems (existing or new) in order to facilitate more reliable and consistent, trouble free operation at higher loading rates, and/or at lower operating costs.

According to the invention various parameters can be used to determine the sludge bed reactor activity, such as those indicated in the dependent claims.

Biogas (and the composition thereof) is an important indicator of system activity at any moment in time. By manipulating the loading to the reactor within certain limits the resulting biogas-production and/or composition can be followed over a specified time span. The response of biogas-production and/or composition to loading changes should provide feedback to the systems control system and provide input to controlling optimal operating conditions during start up and normal operation. Such loading changes should preferably be conducted at discrete intervals and should be done during continuous operation so as not to jeopardise the performance and continuity of the treatment plant.

The second aspect of the invention is to introduce into the sludge bed reactor a device, which can measure the elevation of the sludge bed under conditions of no or low gas, i.e. after the waste water flow has stopped and the gas production has ceased and the sludge in the bed has settled. An online and automatic signal can be obtained from the device on the sludge bed level. This signal provides input to the systems control logic's and will assist in providing systems capacity information. This feature will also signal the operator in case wasting of granular biomass from the reactor is necessary.

In situ capacity measurement allows manipulation of loading and operating conditions of the reactor system through a feed back loop, thereby obtaining the objects of the inventions, as indicated above. It is preferred that this takes place without any noticeable effect on the overall systems performance.

It is therefore preferred to have online and continuous access to performance data on effluent quality. As an increase of the VFA (Volatile Fatty Acids) in the effluent is a first indicator of system performance deterioration, it is a suitable parameter to be monitored. A different method for performance monitoring is based on the use of FTIR spectrophotometry for COD, TOC, VFA, etc. Use of this equipment can be considered in the invention.

Moreover it will be considered to use the signal from performance monitoring itself to assist in assessment of system capacity again by monitoring online the effect of VFA or other parameters after manipulation of the loading to the system.

The invention is now elucidated on the basis of some figures.

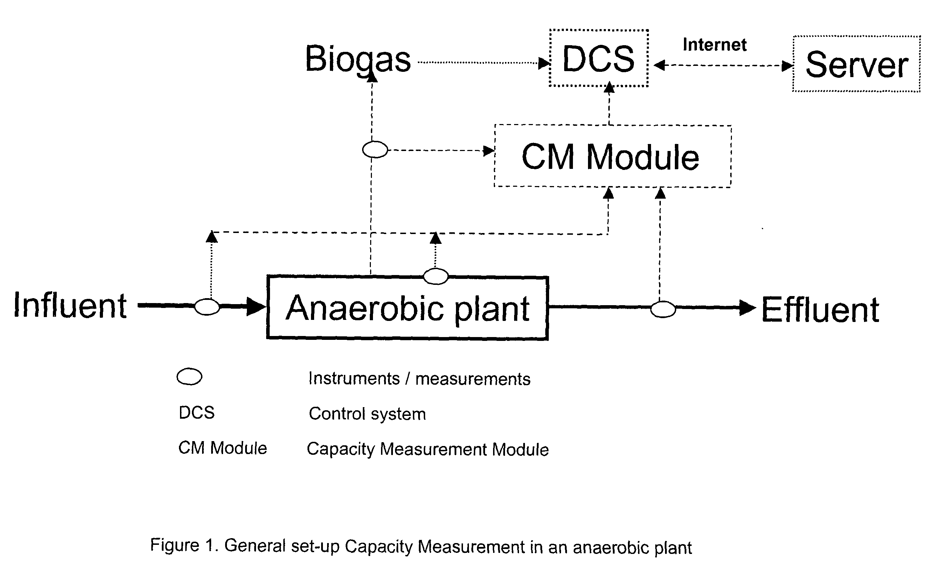

Figure 1 gives an general overview of the set-up of the "C(apacity) M(easurement) Module" according the invention.

The data from instruments and measurements in the influent, the biogas , the anaerobic reactor and the effluent are combined to determine the System Capacity via the CM Module

Typical parameters for the influent could be flow and organic pollution (COD, TOC..), for the biogas flow and composition, for the Anaerobic plant sludge bed height and for the effluent VFA and alkalinity.

The the following figures the use of the CM Module is further explained.

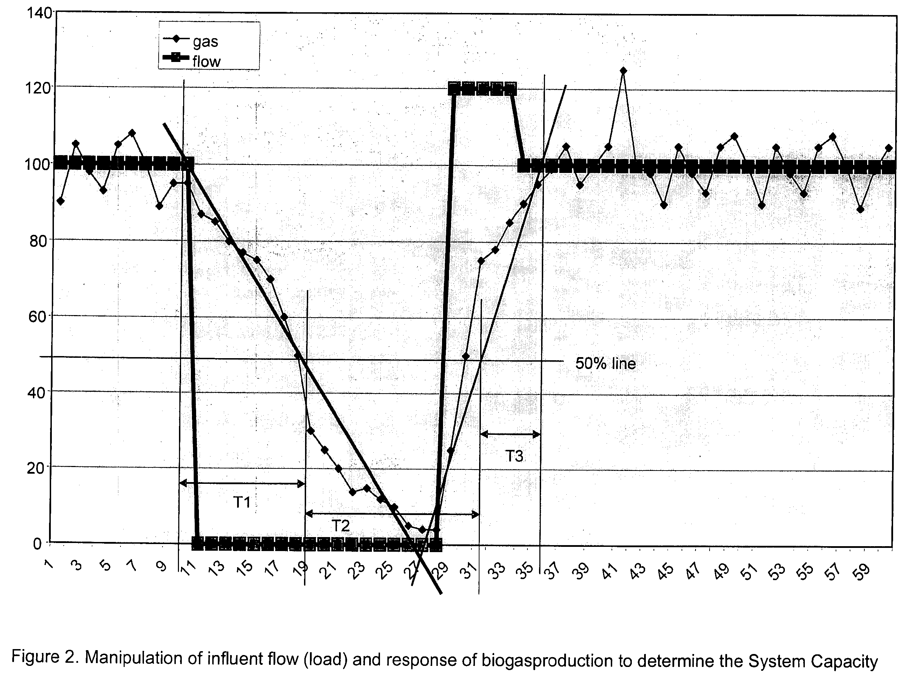

In figure 2 a typical example is given of the manipulation of the wastewater flow (i.e. the load) to the reactor and the resulting biogasproduction.

In this case the flow is completely stopped for some time and restarted for a short period at a 20% higher flow than before the stop.

Several relative parameters, in this case expressed as T1, T2 and T3 can be determined from this manipulation.

T1 (expressed in minutes) is the time it takes for the biogas production to decrease till 50% of the typical value before the stop. The relative value of T1 is an indication of the System Capacity and the lower T1 (so the shorter the period) the higher the System Capacity.

Also other relative values like T2 and T3 are indicators for the System Capacity but other manipulations like restart of the wastewater flow and / or a temporary increase are involved.

T2 (expressed in minutes) is the time it takes for the biogas production to decrease after a stop of the feed flow from 50% till almost zero (<5%) of the typical value before the stop and to come back to 50% after the feed low is restarted (120% for 5 minutes next 100%) at the moment the gasprodution is alsmost zero (<5%).T3 (expressed in minutes) is the time it takes for the biogas production to come back from 50% till the typical value before the stop after the feed low is restarted (120% for 5 minutes next 100%) at the moment the gasprodution is alsmost zero (<5%).

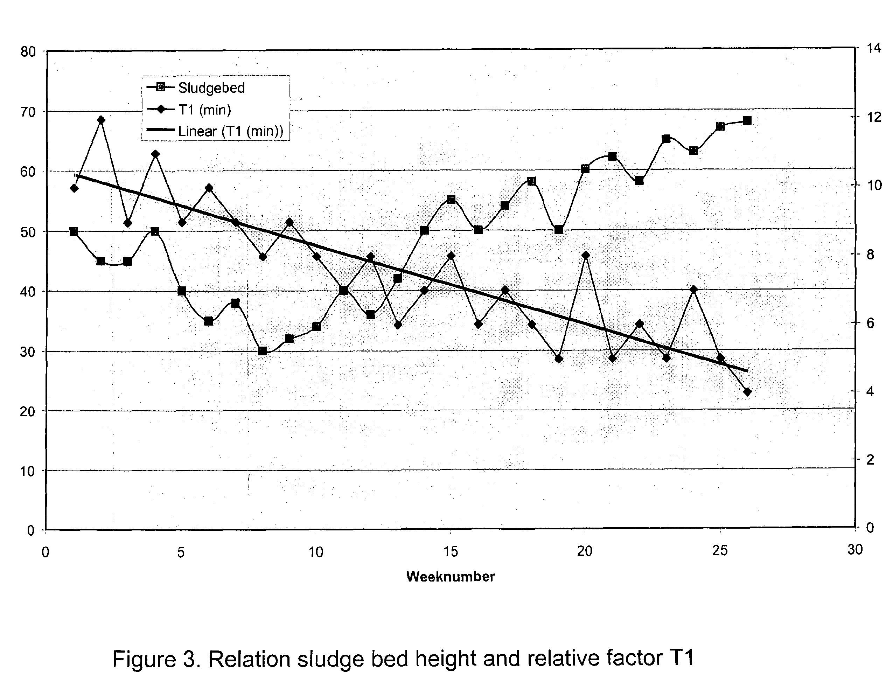

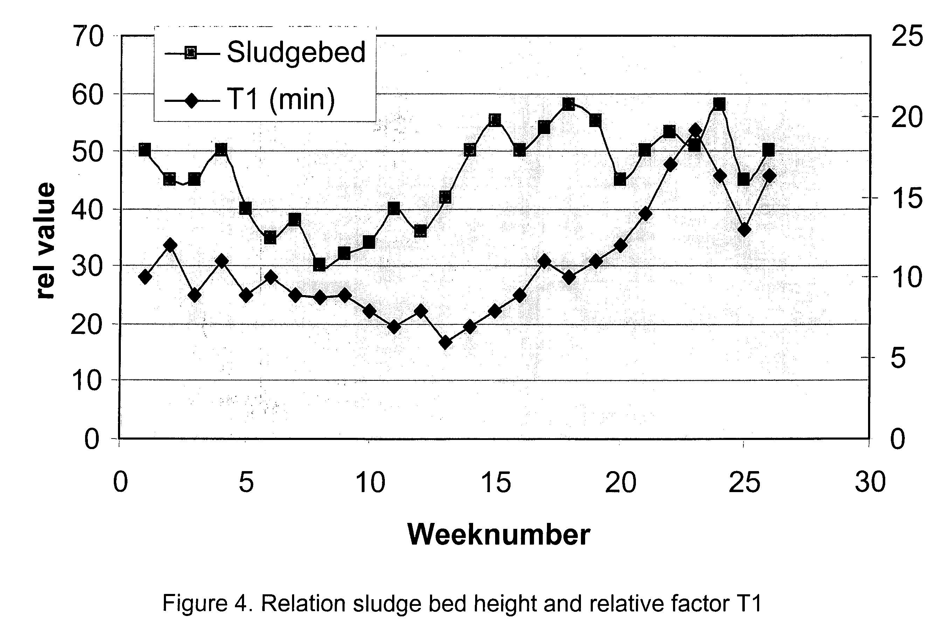

Figure 3 and 4 combines the results of the relative value of T1 with the results from the measured sludge bed height over a larger period of time.

In figure 3 it can be seen that T1 becomes lower in time (so the System Capacity is increasing while the sludge bed height (so the amount of sludge in the reactor) is increasing. A normal and to be expected behaviour of a well performing system.

In figure 4 however T1 is increasing, so he System Capacity is decreasing, while the sludge bed height is increasing. This is not normal and can be an indication of a potential problem and the necessity of operator interference, f.e. by reducing the load, optimalisation of process conditions like pH, temperature, nutrients.

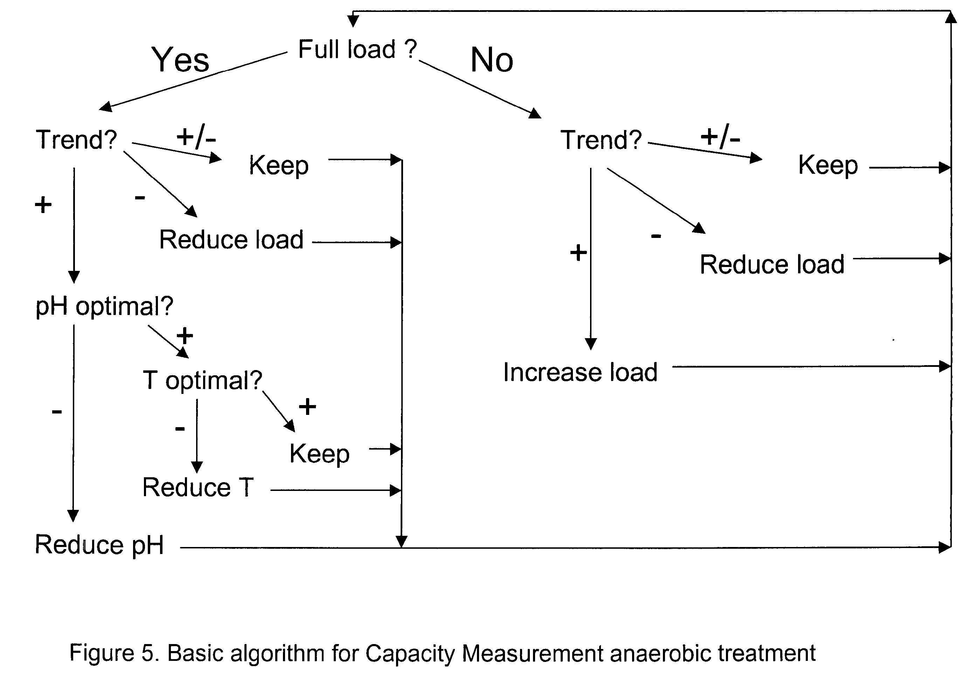

Figure 5 gives a basic algorithm to be used in the Capacity Measurement Module to optimise operational cost (f.e. chemical dosing for pH control). If f.e. the plant is at full load and the trend is that the System Capacity is increasing (so T1 is decreasing) than the pH can be reduced to some extend resulting in savings of chemicals for pH control.

## Claims

1. Process for online capacity measurement of an anaerobic sludge bed reactor for an anaerobic waste water purification process, said process comprising measuring the sludge bed height, monitoring the sludge bed reactor activity and combining the data thus obtained to determine the capacity.

2. Process according to claim 1, wherein the sludge bed reactor activity is measured on the basis of the amount of produced biogas, the composition of the biogas, the pH of the liquid effluent, and the volatile fatty acids and/or the alkalinity content of the liquid effluent.

3. Process according to claim 2, wherein the data obtained from said measurement of the sludge bed reactor activity is combined with data obtained from measuring the load and/or the performance of the anaerobic sludge bed reactor.

4. Process according to claim 1-3, wherein the sludge bed height is measured by stopping the liquid flow to the sludge bed, allowing the sludge in the bed to settle and measuring the height of the sludge in the bed by suitable measuring means.

5. Process according to claim 4, wherein the measurement of the height of the bed is done using density sensing means, preferably optical sensing means such as Doppler measurement.

6. Process according to claim 4, wherein the measurement of the content of volatile fatty acids and/or the alkalinity of the liquid effluent is done by the use of FTIR spectrophotometry.

7. Process according to claim 1-6, wherein the results of the capacity measurement is used for feed-back control of the anaerobic process.

8. Process for anaerobic purification of waste water, said process comprising feeding waste water to an anaerobic sludge bed reactor , treating the waste water in an anaerobic sludge bed to produce a purified effluent and a gas flow, in which process the activity of the sludge bed reactor is measured by measuring the sludge bed height, monitoring the sludge bed reactor activity and combining the data thus obtained to determine the capacity.

9. Process according to claim 8, wherein the sludge bed reactor activity is measured on the basis of the amount of produced bio gas, the composition of the bio gas, the pH of the liquid effluent, the volatile fatty acids and/or the alkalinity content of the liquid effluent.

10. Process according to claim 8, wherein the data obtained from said measurement of the sludge bed reactor activity is combined with data obtained from measuring the load of the anaerobic sludge bed reactor.

11. Process according to claim 8-10, wherein the sludge bed height is measured by stopping the liquid flow to the sludge bed, allowing the sludge in the bed to settle and measuring the height of the sludge in the bed by suitable measuring means.

12. Process according to claim 11, wherein the measurement of the height of the bed is done using optical sensing means.

13. Process according to claim 8-11, wherein the measurement the content of volatile fatty acids and/or the alkalinity of the liquid effluent is done by the use of FTIR spectrophotometry.

14. Process according to claim 8-13, wherein the results of the capacity measurement is used for feed-back control of the reactor.

15. Analysis system for online capacity measurement of an anaerobic sludge bed reactor, said system comprising measuring means for measuring the sludge bed height, monitoring means for monitoring the sludge bed reactor activity and means for combining the data thus obtained to determine the capacity.

16. System according to claim 15, wherein the measuring means for measuring the sludge bed reactor activity comprise measuring means on the basis of the amount of produced biogas, the composition of the biogas, the pH of the liquid effluent, the volatile fatty acids and/or the alkalinity content of the effluent.

17. System according to claim 16, wherein the data obtained from said measurement of the sludge bed reactor activity is combined with data obtained from measuring the load of the anaerobic sludge bed reactor.

18. System according to claim 13-15, wherein the measuring means for measuring the sludge bed height comprises means for measuring the height when the bed is stopped and the sludge has settled.

19. System according to claim 18, wherein the measurement means for the height of the bed comprises density sensing means, preferably optical density sensing means, such as a Doppler measurement.

20. System according to claim 15-19, wherein the measurement the content of volatile fatty acids and/or the alkalinity of the liquid effluent is done by the use of FTIR spectrophotometry.

21. System according to claim 15-20, comprising a feed-back loop to the reactor operating means.

22. Process for anaerobic waste water purification, said process comprising anaerobically purifying waste water and controlling the process using an online capacity measurement process of claim 1-12 or an analysis system of claim 15-21.
